Europäisches Patentamt

European Patent Office

Office européen des brevets

(11) Publication number: **0 206 832**
A2

# EUROPEAN PATENT APPLICATION

(21) Application number: **86304963.1**

(22) Date of filing: **26.06.86**

(51) Int. Cl.⁴: **B 27 N 3/00**, B 29 D 9/00

(30) Priority: **28.06.85 GB 8516373**

(43) Date of publication of application: **30.12.86**
**Bulletin 86/52**

(84) Designated Contracting States: **AT BE CH DE FR GB IT LI LU NL SE**

(71) Applicant: **EXXON CHEMICAL PATENTS INC., 200 Park Avenue, Florham Park New Jersey 07932 (US)**

(72) Inventor: **Knaepen, Marc, Grumstraat 16, B-3400-Landen (BE)**

(74) Representative: **Dew, Melvyn John et al, Esso Chemical Ltd. Esso Chemical Research Centre P.O. Box 1, Abingdon Oxfordshire, OX13 6BB (GB)**

(54) **Upgrading of composites.**

(57) Substrates such as chipboard or cement aggregate board are upgraded with a cured rubber layer by forming on the substrate a composite of uncured but curable rubber sheeting containing a heat activatable curative with an intermediate film of polar thermosetting resin, and hot pressing the uncured composite so as to form polar bonds between the resin and substrate with simultaneous co-vulcanisation of the rubber and the resin.

This invention relates to the upgrading of substrate elements by providing them with a layer of cured elastomeric material, and is particularly but not exclusively concerned with composite elements which are useful in the building and construction industry by virtue of having a desired degree of weather resistance.

The principle of producing weather resistant panels or mouldings having protective elastomeric layers is known from EP 9053 and CA 1 150 465, the teachings of which are incorporated herein by reference.

According to EP 9053, a process for producing weather resistant panels or mouldings which consist of wood particles mixed with binding agents, of fibres containing lignocellulose or of raw materials prepared in another way and which are pressed together under the influence of heat, is characterised in that before hot pressing a covering layer made of vulcanisable elastomeric materials, such as natural and/or synthetic rubber or the like, is applied to the topside and/or underside of the cake of chips which has been formed from the wood particles, fibres containing lignocellulose or raw materials prepared in another way, whereupon hot pressing is carried out with simultaneous vulcanising of the covering layers. Panels or mouldings produced in this way are characterised by a permanently elastic covering layer which is connected intimately to the chip body and which is fully vulcanised. Such panels or mouldings may be coloured and/or provided on the outer surface of the elastic layer with grooves or grains or other patterns. Furthermore, the elastic layer may incorporate a reinforcement in the form of a web or fabric.

According to the above prior art, many wood fibre materials for the building industry are limited to interior use since they are not sufficiently weather resistant to be used externally. Such materials, for example particle boards, fibre boards or insulating boards are cheap, light and insulating and so are ideal building components; however, a problem facing the building industry has been the requirement of providing necessary weather resistance and ageing stability to the materials. Modification by glues, hydrophobic agents or antibacterial agents have not provided realistic solutions from an economic or practical viewpoint. More recent developments such as applying to the materials layers of synthetic resin-soaked papers, sheet metals, asbestos cement or synthetic foils have also proved unsatisfactory, since these tend to peel off the substrate under the influence of the weather (temperature variations, radiation and moisture).

The solution proposed by the art specifically mentioned above provides a building board which is said to be economical to produce, weather resistant, substantially non-ageing, embrittling or cracking, and which has high abrasion-resistance, impact resistant capacities and can be made substantially non-inflammable. Indeed, the general teaching of the art is to provide in a single production step a woodchip or lignocellulosic substrate including a curable resin binding agent, coated with a weather resistant elastomeric material, the elastomeric material being in vulanised form and being both adhered to one surface of the base material (substrate) and penetrated and impregnated into that surface of the base material. The art teaches the use of a natural vulcanisable rubber or a synthetic vulcanisable rubber as the elastomeric material. Such rubbers may also include stabilising agents and further additives so as substantially to reduce the brittleness and cracking thereof under the influence of rain, ozone, light radiation, UV radiation and heat radiation. The elastomers may also be modified by altering the chemical composition and the type and quantity of added fillers. This, though, is as far as the prior art disclosure of suitable elastomeric layers goes. It is said that the essence of the prior art technique is the fact that the elastomeric coating penetrates into the substrate wood fibres in a single production run, without the need of adhesive agents, thus the process comprises substantially simultaneously compressing the particles of the woodchip or lignocellulose substrate and hardening the adhesive agents (binding agents) contained therein; and compressing and vulcanising the covering layer of natural rubber and/or synthetic rubber or other elastomer. The elastomer coating may be applied by spraying, pouring, sprinkling, painting, or it may be applied in the form of a self-supporting film, that is a rubber sheet.

It will be appreciated therefore that the above-mentioned patents describe the principle of coating woodchip in a single simultaneous operation, but without giving full details of the best means of obtaining such panels. Further work on this topic has lead to certain selected and advantageous developments of the basic art, but again concerned with a simultaneous or one-step production technique, whereby the elastomeric layer is applied to a bed of chips or fibres and the whole finished panel is produced in one operation. This technique is useful, but it will be appreciated that such a one-step method can only be used by producers who have the facility for manufacturing the basic substrate, that is chipboard or fibre board. A more useful technique has been recognised as being the upgrading of existing or already produced substrates such as chipboard, concrete board or aggregate board. The ability to provide a firmly adhering elastomeric layer to such boards would provide a greater flexibility to the production industry and also a wider variety of

0206832

products, since it is possible to apply elastomeric layers to already formed substrates on a smaller scale than if the substrate itself has to be produced in the same operating step.

A detailed study of the so-called two-step or sequential route to elastomer-coated boards has shown that are many difficulties associated with the apparently simple technique of adhering an elastomeric sheet to a pre-formed substrate. Considerable expertise has been found to be necessary in order to produce a reliable product which remains integral on handling immediately after its production, which may be efficiently produced on a commercial scale and which remains in a usable condition following the generally rough treatment it may receive in use. Moreover, it is important that the product should withstand the effects of weathering when exposed to the atmosphere for many years. In particular, the elastomeric outer layer of such products is preferably long-term UV stable and flame retardant and should have good peel strength.

EP-A-0097279 teaches the hot pressing of a cover layer of unvulcanised rubber onto a fibrous composition including a synthetic resin and curative, with a thermoplastic resin film intermediate these two layers. The product, intended for car components eg. dust covers and in which the fibres may be for example wool, cotton or glass wool, is not proposed for building element use where long exposures to high temperatures and hence structural integrity is a requisite.

GB 1529778 teaches the production of laminated plastics materials with non-slip surfaces by hot pressing a rubber composition onto a core or substrate carrying a heat-hardenable melamine-formaldehyde impregnated paper on fabric, to form a consolidated product.  The rubber composition is a creamy mixture of chlorosulphonated polyethylene rubber, the resin, and a curative, and because of its nature is not self-supporting but has to be carried on a temporary support during the production process, which support is subsequently removed.

JP 53-69816 teaches the lamination of a decorative eg rosewood layer onto a basic wood plate by first spreading eg melamine resin onto the wood and applying an elastic sheet thereto, followed by hot pressing, and thereafter spreading the adhesive onto the sheet and applying the decorative layer with further hot pressing.  This is clearly the simple use of melamine resin in its well-known adhesive form, there being no teaching to employ same as a self supporting film, or of its use with particulate cellulosic substrate or with specific rubbers which convulcanise with the melamine under hot press conditions.

According to the present invention, there is provided a process for producing a vulcanised composite comprising a substrate having a cured elastomeric layer secured thereto, which process comprises (a) providing (1) a self-supporting sheet of uncured elastomeric material comprising a vulcanisable elastomer selected from copolymers of ethylene, at least one other alpha olefin and from zero to a minor proportion of at least one copolymerisable polyene, butyl rubbers, chlorosulphonated polyethylene rubbers, and mixtures of two or more thereof, and a heat activatable curative system therefor, (2) a self-supporting film of polar thermosetting resin and (3) a substrate comprising cellulosic particles and being capable of chemical interaction with said resin at elevated temperature; (b) forming an uncured composite of the substrate and the sheet with the resin film therebetween; and (c) hot pressing the uncured composite to form polar bonds between the resin and substrate and simultaneously to co-vulcanise the elastomeric material and the resin to generate the desired vulcanised composite.

The substrate employed in the process of the invention comprises cellulosic particles and is preferably wood chipboard or lignocellulosic fibre board. Such materials are well-known in the building and furniture industry, but principally for indoor use; without special treatment, such boards do not have the necessary weather resistance for outdoor use. Such boards are conventionally produced by hot pressing of a bed of cellulosic particles eg wood, fibres or chips, impregnated with a binding

- 8 -

0206832

agent. Preferably, such boards are hardened with a polar resin binding agent, and it is preferred that this resin should be a phenol-formaldehyde resin, melamine-formaldehyde resin, isocyanate resin or urea-formaldehyde resin. Substrates incorporating such resins have been found to be particularly susceptible to coating with elastomeric layers by the process of the present invention.

The cellulosic particles of the substrate may alternatively be bonded with inorganic material such as cement. It is preferred that such cement compounds are in the form of boards where the final product is intended for use in the building industry. Vulcanised composites based on cement bonded woodchip boards find use as external claddings in the building industry. The provision of a cured elastomeric layer for such boards means that they acquire a weather resistance not hitherto possible when the materials themselves are exposed to the atmosphere; such composites may be generally thinner, lighter and of improved impact strength, and hence cheaper and easier to handle than conventional uncoated cement boards.

Of the elastomeric materials which may be employed in accordance with the invention, it is particularly preferred that the elastomeric material should comprise a copolymer of ethylene and at least one other alpha-olefin and from 0 to a minor proportion of at least one copolymerisable polyene. More preferably, the elastomeric material is a terpolymer of ethylene, at least one other alpha-olefin and a minor proportion of at least one copolymerisable diene. Particularly preferred is an ethylene-propylene-diene terpolymer (EPDM), for example containing from 1 to 10% of diene. The diene may be for example 1,4 hexadiene, dicyclopentadiene or an alkylidenenorbornene such as methylenenorbornene or ethylidenenorbornene, or vinylidenenorbornene, although the many alternatives known in the art are suitable. Such elastomer, when vulcanised, inherently has good weather resistant properties, and by incorporating other components into the elastomeric material, such properties can be optimised for the envisaged end use of the vulcanised composite. Also preferred as elastomer is the EPM copolymer rubber. It is particularly preferred that the sheet of uncured vulcanisable elastomer should be a mixture of EPDM and EPM copolymer rubber, the proportions being adjusted on a cost basis as necessary.

The curative system contained in the elastomer sheet is selected to provide curing action on the elastomer, and will be one which is activated at the temperature at which hot pressing is conducted. Preferably the curative system is a peroxide or peroxide-based system, and this is particularly advantageous in the case where the elastomeric material is EPDM or EPDM/EPM blend, since EPDM cured via peroxide gives a particularly hard-wearing and weather resistant vulcanised product. More preferably, the peroxide system comprises aromatic or aliphatic peroxides such as the aromatic diacyl peroxides and aliphatic diacyl peroxides, dibasic acid

- 10 -

0206832

peroxides, ketone peroxides, alkyl peroxyesters, alkyl hydroperoxides, eg diacotylperoxide, dibenzoyl-peroxide, bis-2, 4-dichlorobenzoyl peroxide, ditert.-butyl peroxide, dicumylperoxide, tert.-butylperbenzoate, tert.-butylcumyl peroxide, 2,5-bis-(tert.-butylperoxy)-2,5-dimethylhexane, 2,5-bis-(tert.-butylperoxy)-2,5-dimethylhexyne-3; 4,4,4', 4(-tetra-(tert.-butylperoxyisopropyl)-benzene, 1,1-bis-(tert.-butylperoxy)-3,3,5-trimethylcyclohexane, lauroyl peroxide, succinic acid peroxide, cyclohexanone peroxide, ter.-butyl peracetate and butyl hydroperoxide. The peroxide is preferably present in the elastomeric material in an amount of from 2-20, more preferably from 5-15 parts by weight of peroxide per 100 parts by weight of vulcanisable elastomer(phr). Such proportions of curative have been found to give excellent covulcanisation of the elastomeric material and the film of polar thermosetting resin.

It is this co-vulcanisation, coupled with the bonding of the resin to the substrate, which is believed to give the good adhesion properties possible by use of the process of the invention. As will be appreciated by those skilled in the art, other curative systems are possible, depending on the desired end properties and the nature of the elastomer, for example, sulphur or a phenol resin curative system may be used.

The elastomeric material may alternatively or additionally comprise a butyl rubber (including halogenated butyl rubbers) or a chloro-sulphonated polyethylene rubber. Such materials, in the cured state, have certain properties which make them suitable for outdoor applications, but are in general less preferred than EPM and/or EPDM rubbers.

It is a particular advantage of the defined process that the elastomer, before the hot pressing stage, is in the form of a self-supporting sheet. This greatly facilitates commercial scale production since the elastomer can be delivered to the substrate surface, after application of the resin film, from a drum or roll. In contrast, rubber formulations in cream form which have to be carried on a temporary support are difficult to handle and do not readily lend themselves to large, commercial scale production techniques.

The self supporting film of polar resin is a heat curable, ie. thermosetting, resin, such as methacrylate, polyurethane or epoxy resin. However, it is especially preferred that the resin comprises melamine eg. melamine-formaldehyde or a phenolic resin.

The resin is applied to the substrate in the form of a self-supporting film, and this brings with it the production conveniences mentioned above with regard to the self-supporting elastomer sheet.

- 12 -

0206832

In the case of melamine resin, it is particularly preferred for the film to comprise so-called melamine paper, that is paper or tissue impregnated with melamine resin. Preferably the film comprises from 20 to 200, more preferably about 200 parts by weight of resin per 100 parts by weight of paper or tissue, since this heavier weight of melamine paper has been found to give exceptionally good bonding between the elastomer sheet and the substrate.

The conditions under which hot pressing is performed will depend upon the nature of the elastomer and resin systems employed. However, typically, hot pressing will be carried out at a temperature of from 130 to 250°C, more preferably from 160 to 220°C. Similarly, the pressure applied to the composite will be dependent on the systems employed, but typically from 1000 to 10000 kPa, more preferably from 2000 to 6000 kPa. For example, hot pressing may be carried out for a period of 0.5 to 15 minutes, which is generally sufficient to convert the uncured composite to a fully vulcanised material in which the elastomer layer is firmly adhered to the substrate.

Investigations have shown that the process of the invention may be performed on hot press equipment which is conventionally employed to upgrade chipboard with rigid plastic sheeting, even though the elastomer sheet itself is not rigid. Such equipment typically comprises a bed on which the substrate board is laid, and a hot press face which descends on the substrate after the required over-layer has been applied thereto. In such equipment, after hot pressing, the pressure is generally released, and the board is removed from the bed immediately, that is whilst the composite is still hot, by means of the application of vacuum cups to the upper surface of the composite.

The process of the present invention can be carried out on such equipment, and it is to facilitate good and efficient commercial operation that the resin film is required to be thermosetting. If the resin were to be thermoplastic, then the vulcanised composite would have to be allowed to cool below the plastic limit of the resin, before the pressure could be released. If the pressure were to be released whilst the system is still hot, then the vulcanised elastomer sheet would pull away or bulge from the under-lying substrate due to the presence of moisture and air voids in the substrate, whether this be chipboard, lignocellulosic fibre board or cement chipboard. The applied temperature, for example 180°C, generates steam or other vapour in the system if pressure is released, and this causes physical deformation of the sheet if thermoplastic resins are used.

Similarly, in use of conventional equipment wherein the hot pressed composite is lifted away from the hot press bed by means of vacuum cups, if the resin film which is intermediate the elastomer and

substrate is still plastic, the suction effect pulls the sheet away from the substrate. The resin used in accordance with the process of the invention is therefore required to be thermosetting, and it will be appreciated that with such materials, once the thermoset temperature has been reached, the resin becomes solid and hence is not susceptible to bulging or lifting away from the substrate by virtue of pressure being released prior to cooling, or by virtue of the application of suction to the upper surface of the applied elastomeric sheet. In other words, thermosetting resins, especially melamine, does not give hot flow in the composite.

- 15 -

0206832

It has been found that melamine, particularly in the form of melamine paper, performs particularly well in conjunction with EPDM or EPDM/EPM blend as elastomer and peroxide as the curative system. Without wishing to be bound by theory, it is believed that, under hot press conditions, melamine cures by a condensation reaction, and the free radicals generated in the EPDM via the peroxide curative give good chemical bonding with the condensing melamine molecules. Simultaneously, the application of pressure to the system forces the melamine into voids and intersticies in the substrate, especially chipboard, so giving a physical linkage between the EPDM or EPDM/EPM sheet and the substrate. Moreover, it is believed that the polar nature of the resin leads to chemical inter-action with the resin present in the chipboard (as binding agent in the original production process therefor). In the case of cement bonded chipboards, this will already contain molecules, eg silica, which are polar in nature.

The hot pressing operation is preferably continued until the elastomeric material is fully cured, since this gives optimum weather resistance to the finished product. Moreover, in order to obtain good adhesion between the elastomer and the substrate, the hot pressing is also preferably performed so that the intermediate thermosetting resin film is also fully cured. This, in conjunction with the preferred peroxide curative system will optimise the strength of adhesion to the substrate. Although

for certain end uses a peel strength in excess of, say, 0.3 kg/cm may be acceptable, the hot pressing is preferably carried out until the resulting composite has a peel strength of the sheet on the substrate of at least 1 kg/cm, as measured in accordance with ASTM D816. It is particularly preferred that for building industry end uses, the elastomer/ curative/polar resin film/ substrate system be selected in conjunction with applied hot pressing conditions so that a final peel strength in excess of 2 kg/cm         is obtained in the finished vulcanised composite.

As mentioned previously, the particular characteristics of EPDM make this especially suitable for composites designed for outdoor applications. The inherent properties of EPDM or any particular elastomer employed in accordance with the invention may be modified by the inclusion of other additives such as those selected from UV stabilisers, flame retardants, plasticizers, reinforcers, fillers, heat stabilisers, coupling agents, processing aids, colouring agents and acidity buffers in any combination.

It will be appreciated that selection of these additives depends on the proposed end use of the upgraded substrate. For example when the rubber is black (contains carbon black) then no extra UV-stabilizer package will be necessary, but if the rubber contains whitener eg $TiO_2$ or other colouring agents, then it may be desirable to incorporate UV stabilizers or acidity buffers. Again, depending on envisaged end use, the rubber may contain a flame retardant filler package or reinforcement fillers.

The substrate to which the elastomeric material is applied in accordance with the invention may be of substantially planar format, or it may be pre-moulded into a shaped configuration, to suit the required end use. In addition, it is possible to apply the elastomeric material thereto in accordance with the invention such that the elastomer forms a type of hinge to allow movement of adjacent parts of the substrate. The elastomer sheet may be applied simply to one surface of the substrate, although in other embodiments the resin film and elastomer sheet may be applied, in step (b) of the process, to more than one surface of the substrate prior to hot pressing. Thus composites in which both their inner and outer surfaces have an elastomeric facade are possible. In order to make the composites more attractive, the elastomeric material may include

0206832

additives which provide colour thereto. In addition, or in the alternative, the elastomeric sheet may have, or may be provided during the hot pressing step with, a grooved, grained or otherwise patterned outer surface, to suit the required end use of the composite.

In a particularly preferred aspect, the process according to the invention provides for the upgrading of woodchip board or cement bonded woodchip board by providing the same with a firmly adhering elastomeric layer, the process comprising forming an uncured composite of the board, a self supporting sheet of uncured EPDM or EPDM/EPM blend rubber containing a peroxide curative system, and, intermediate said board and sheet, a self-supporting film of a thermosetting resin which is co-vulcanisable with said EPDM or EPDM/EPM at elevated temperature, and hot pressing said uncured composite to form polar bonds between the resin and the board and simultaneously to co-vulcanise the EPDM and the resin. All the relevant preferred aspects of the process as described hereinbefore,apply to this specific aspect of the invention. In the case where the composite to be upgraded is chipboard, it is preferred to use melamine or phenolic resin as the polar resin intermediate; in the case of cement bonded chipboard, it has been found that use of methacrylate, polyurethane or epoxy resins brings certain advantages.

Examples

A vulcanisable elastomeric composition having the formulation (in parts by weight) as listed in Table 1 was prepared by the following technique. First the filler and plasticizer components were mixed in an internal mixer (15 litre capacity, Banbury type) at 40-50°C. After 30 seconds' mixing, both elastomeric polymers (EPM and EPDM) were added, together with all other components except the curatives. The mixing chamber was then closed and the mixing was continued with heating of the chamber until after 4-5 minutes the temperature had reached $150^\circ$ C $\pm$ $10^\circ$ C. At this stage the mixture was dumped on to a mill and sheeted out to a thickness of 1.5 cm, the sheets then being allowed to cool to room temperature.

In a second pass through the internal mixer, the sheet was introduced into the chamber at 40-50° C and the curatives were added. Mixing and heating was continued over 1-2 minutes until a temperature of 90-100° C had been reached. The mixture was then dumped onto the mill and sheeted to a thickness of 1.5 cm, followed by cooling to room temperature. Thereafter the sheet was calendered to a desired thickness of 1.0 mm, the rubber at this stage still not being in the cured state, but being intended for curing in a subsequent hot pressing stage when applied to a chipboard. However, to determine the physical properties of the final product coating, a sample of the thus-formed sheeting was press cured at 50kg/cm$^2$, 180° for 8 minutes and the cured product was tested for physical and cure properties, as representative of the nature of the cured rubber when adhered to a substrate in accordance with the invention.

The cure characteristics of the sheet compound, as measured on a Monsanto oscillating rheometer of arc $\pm$ 5 at 180$^{\circ}$C, were as follows:

| | | |
|---|---|---|
| ML minimum | 21 | pound/inches |
| MH maximum | 116 | pound/inches |
| $ts_2$ scorch | 0.35 | minutes |
| $tc_{90}$ cure | 1.05 | minutes |

The characteristics of the press cured sheeting were as follows:-

| | | |
|---|---|---|
| Shore A hardness | 80 | ASTM D 2240 |
| 100% modulus (MPa) | 4.4 | ASTM D 412 |
| 300% modulus (MPa) | - | " |
| Tensile strength (MPa) | 5.6 | " |
| Elongation at break (%) | 233 | " |

## TABLE 1

| Composition | 1 |
|---|---|
| (1) EPDM | 25 |
| (2) EPM | 75 |
| (3) Filler (a) | 180 |
| (4) Filler (b) | 20 |
| (5) Plasticizer | 20 |
| (6) Stabilizer (a) | 40 |
| (7) Stabilizer (b) | 0.3 |
| (8) Stabilizer (c) | 0.15 |
| (9) Process aid (a) | 10 |
| (10) Process aid (b) | 1 |
| (11) Process aid (c) | 3 |
| (12) Activator | 1 |
| (13) Zinc oxide | 5 |
| (14) Coupling agent | 2 |
| (15) Curative (a) | 14 |

The components used in producing the above composition were as follows:

(1)       EPDM =      VISTALON 7000 of Essochem, an ethylene/propylene/diene terpolymer rubber of Mooney ML(1+8) at 127° C = 55, 70 wt% ethylene content and high diene content

(2)       EPM =      VISTALON 504 of Essochem, an ethylene/propylene copolymer rubber of Mooney ML (1+8) at 127° C = 25; 50 wt% ethylene content

(3)       Filler (a)= Martinal OL 111 Aluminium trihydroxide

(4)       Filler (b)= KS 300 reinforcing silica filler

(5)       Stabilizer= diiso decyl phthalate (DIDP)

(6)-(8) Stabilizers (a),(b),(c) = titanium dioxide, Tinuvin 770 and Irganox B215 UV stabilizers, respectively

(9)-(11) Process aids (a),(b),(c) = Allied Chemicals low density polyethylene ACPE 617A; stearic acid; and polyethylene glycol 4000 respectively

(12) Activator = trialkylcyanurate, a peroxide activator

(13) Zinc Oxide

(14) Coupling Agent = Union Carbide vinyl silane A172, for coupling fillers and polymers

(15) Curative (a) = Trigonox 29/40 MB of Akzo (1,1-di-tert butyl-peroxy - 3,3,5 trimethyl cyclohexane in a masterbatch with EPDM, peroxide content 40wt%.

The uncured elastomeric sheeting produced as described above was used to upgrade wood chipboard by a hot press technique, using self-supporting resin films as the means for securing adhesion and covulcanisation in the finished product. The substrate employed was a preformed commercially available woodchip board having a polar resin bonding system and being 18 mm in thickness. Samples of the elastomeric sheeting were applied to the substrate with a variety of self-supporting resin films as intermediate layer, and the uncured composite was then subjected to hot pressing under time, temperature and pressure conditions which permitted covulcanisation of the elastomer and the intermediate resin, with formation of polar bonds between the resin and substrate. In fact for each sample the hot pressing was conducted for 2 - 3 minutes at $200^\circ$ C and 35 kg/cm$^2$. The pressure was released at the elevated temperature, and the samples were allowed to cool to room temperature.

The samples of vulcanised composite produced by the above technique were cut to strips 6.5 cm wide and subjected to a standard peel test in accordance with ASTM D816, the measurements being made at room temperature and at $180^\circ$ C on an Instron tensile tester. The results obtained are shown in Table 2, where the values for samples produced in accordance with the invention are listed numerically and comparisons are alphabetical.

## Table 2

| Sample | Resin Film | Thickness | Peel Strength | |
|---|---|---|---|---|
| | | Micron | (kg/cm) | |
| | | | 20°C | 180°C |
| 1 | Melamine | 50 | 3.2 | 1.2 |
| 2 | Phenol | 50 | 3.8 | 1.4 |
| A | EAA | 50 | 4.4 | 0.5 |
| B | EAA | 50 | 3.7 | 0.5 |
| C | EVA | 50 | 3.2 | 0.5 |
| D | Ionomer N22 | 50 | 3.4 | 0.5 |
| E | Ionomer N21 | 50 | 3.1 | 0.5 |
| F | LDPE | 50 | 3.7 | 0.5 |
| G | LLDPE | 50 | 4.6 | 0.6 |

The films, each 50 microns thick, used in the preparation of these samples were as follows:

1 = Melamine HP paper, an impregnated melamine paper of total weight (per sheet) 128 g and containing 92 g thermosetting melamine resin.

2 = Phenolic Kraft paper, being (per sheet) 80 g paper impregnated with 120 g thermosetting phenol resin.

A = Ethylene/acrylic acid copolymer (EAA) TR 5100 of Essochem, containing 12 wt% AA and having melt index (ASTM D 1328) = 8.0 g/10 min and melting point 98.5°C

B =    EAA TR 5000 of Essochem containing 5 wt% AA and having melt index (ASTM D 1328) = 8.0 g/10 min and melting point 103° C

C =    Ethylene/vinyl acetate copolymer (EVA) Escorene Ultra UL 00018 of Essochem containing 18 wt% VA and having melt index (ASTM D 1328) = 0.05 g/10 min.

D =    Ionomer produced by crosslinking EAA of sample A with a sodium salt.

E =    Ionomer produced by crosslinking EAA of sample A with a zinc salt.

F =    Low density polyethylene Escorene LD 180 of Essochem having melt index (ASTM D 1328) = 2.0 g/10 min.

G =    Linear low density polyethylene Escorene LL1001 of Essochem having melt index (ASTM D 1328) = 1.0 g/10 min.

It will be appreciated that the resin films of samples A - G are thermoplastic and therefore the process used to produce such samples does not fall within the scope of the invention.  The resin films (papers) of samples 1 and 2 are however thermosetting, so the process was within the scope of the invention.

Referring to Table, 2 it is seen that the room temperature (20° c) peel strength values for all the samples were approximately the same, in the 3.5-4.5 range, and such values are perfectly acceptable for construction elements which are only exposed to room type temperatures.

However, the values measured at 180° C clearly show the great advantage of using thermosetting resin papers in the process compared with the conventional thermoplastic films. The samples produced by the process of the invention had peel strengths some 2 to 3 times those of the comparisons, and this is of importance in construction elements which are exposed to the environment: temperatures considerably above 100° C can readily be reached in many parts of the world, and even in relatively temperate climates, and it is of importance that building facades or other structural elements which might comprise the vulcanised composites produced by the process of the invention do not disintegrate in these conditions.

0206832

CLAIMS

1.  A process for producing a vulcanised composite comprising a substrate having a cured elastomeric layer secured thereto, which process comprises (a) providing (1) a self-supporting sheet of uncured elastomeric material comprising a vulcanisable elastomer selected from copolymers of ethylene, at least one other alpha olefin and from zero to a minor proportion of at least one copolymerisable polyene, butyl rubbers, chlorosulphonated polyethylene rubbers, and mixtures of two or more thereof, and a heat activatable curative system therefor, (2) a self-supporting film of polar thermosetting resin and (3) a substrate comprising cellulosic particles and being capable of chemical interaction with said resin at elevated temperature; (b) forming an uncured composite of the substrate and the sheet with the resin film therebetween; and (c) hot pressing the uncured composite to form polar bonds between the resin and substrate, and simultaneously to co-vulcanise the elastomeric material and the resin to generate the desired vulcanised composite.

2.  A process according to claim 1, wherein the substrate comprises wood chipboard, lignocellulosic fibre board or cement bonded wood chipboard.

0206832

3. A process according claim 2, wherein the wood chipboard or fibre board has been hardened with a polar resin binding agent comprising phenol-formaldehyde, melamine-formaldehyde, isocyanate or urea-formaldehyde resin.

4. A process according to claim 1, 2 or 3 wherein the elastomeric material comprises EPM copolymer rubber, EPDM terpolymer rubber or a blend of EPDM and EPM.

5. A process according to any one of the preceding claims, wherein the curative system is peroxide or peroxide-based.

6. A process according to claim 5 wherein the peroxide or peroxide-based curative system is present in an amount of from 5 to 15 parts by weight per 100 parts by weight of the elastomeric material.

7. A process according to any one of the preceding claims wherein the thermosetting resin film comprises a methacrylate resin, a phenolic resin, an epoxy resin or a polyurethane resin.

8. A process according to any one of claims 1 - 6 wherein the thermosetting resin film comprises melamine.

9.    A process according to claim 8 wherein the thermosetting resin film comprises paper or tissue impregnated with melamine resin.

10.   A process according to any one of the preceding claims, wherein hot pressing is carried out at a temperature of from 130 to 250° C.

11.   A process according to any one of the preceding claims, wherein hot pressing is carried out at a pressure of from 1000 to 10000 kPa.

12.   A process according to any one of the preceding claims, wherein the uncured composite is subjected to pressure for a period of from 0.5 to 15 minutes.

13.   A process according to any one of the preceding claims wherein, on completion of hot pressing, the pressure is released whilst the vulcanised composite is still hot.

14.   A process according to claim 13, which comprises the additional step of lifting the vulcanised composite by means of a vacuum cup applied to the composite after release of pressure but whilst said vulcanised composite is still at elevated temperature.

15.  A process according to any one of the preceding
     claims, wherein the cured elastomeric layer is
     substantially fully vulcanised.

16.  A process according to any one of the preceding
     claims, wherein hot pressing is carried out until the
     resulting vulcanised composite has a peel strength of
     the sheet on the substrate of at least 1 kg/cm (ASTM
     D 816).

17.  A process according to claim 16 wherein hot pressing
     is carried out until the resulting vulcanised
     composite has a peel strength of the sheet on the
     substrate of at least 2 kg/cm (ASTM D 816).

18.  A process according to any one of the preceding
     claims, wherein the elastomeric material includes
     additives selected from UV stabilisers, flame
     retardants, plasticizers, reinforcers, fillers, heat
     stabilisers, coupling agents, processing aids,
     acidity buffers, colouring agents and mixtures of two
     or more thereof.

19.  A process according to any one of the preceding
     claims, wherein step (b) is conducted by applying the
     resin film and elastomer sheet to more than one
     surface of the substrate prior to hot pressing.

20.  A process according to any one of the preceding
     claims, wherein the elastomeric sheet has, or is
     provided during the hot pressing with, a grooved,
     grained or otherwise patterned outer surface.

21.  A building, a construction, a constructional element
     or an architectural feature which comprises or
     incorporates a vulcanised composite produced by the
     process according to any one of the preceding claims.